# EUROPEAN PATENT APPLICATION

(11) **EP 4 549 307 A1**
(43) Date of publication of application: **07.05.2025**
(21) Application number: 23816044.4
(22) Date of filing: 30.05.2023
(51) Int. Cl.: B63B 35/00, B63B 7/08, B63B 35/44, F03D 13/25

(54) **FLOAT STRUCTURE FOR OFFSHORE WIND POWER GENERATION**

(30) Priority: 03.06.2022 JP 2022091175
(71) Applicant: The University of Tokyo, Bunkyo-ku, Tokyo 113-8654 (JP); Chodai Co.,Ltd., Tokyo 103-0014 (JP); Waterfront Real Estate Co., Ltd, Nishinomiya-shi, Hyogo 662-0066 (JP)
(72) Inventor: NAKAJIMA, Toshio, Nishinomiya-shi, Hyogo 662-0066 (JP); TABETA, Shigeru, Tokyo 113-8654 (JP); HIRABAYASHI, Shinichiro, Tokyo 113-8654 (JP); INOKUCHI, Takeo, Tokyo 103-0014 (JP); IMAI, Motoko, Tokyo 103-0014 (JP); YAMASHITA, Yuuki, Tokyo 103-0014 (JP)
(74) Representative: Hasegawa, Kan
(86) International application number: PCT/JP2023/020067
(87) International publication number: WO 2023/234287

(57) **Abstract**

A floating structure (5) for offshore wind power generation comprises a floating base (10) where a windmill tower (1) is disposed in a standing manner and that is divided into a plurality of air chambers (11); and an air amount adjustment unit (20) that adjusts air amounts in the air chambers (11) that oppose each other with a center of the floating base (10) therebetween. Each of the air chambers (11) includes an open bottom portion and a soft film body (16) in a slackened state that partitions an inside of the air chamber (11) into an air layer (17) and a water layer (18). Therefore, the floating structure (5) is one whose installation location is not limited, that provides excellent stability, and that is also suitable for use in extra-large-scale wind power generation of 20 MW or greater.

## Description

### Technical Field

The present invention relates to a floating structure suitable for floating-type offshore wind power generation.

### Background Art

As measures against global warming, the promotion of use of renewable energies of, for example, solar power generation and wind power generation, that do not emit carbon dioxide and do not depend upon fossil fuels is one important approach. Among the types of wind power generation, the introduction of offshore wind power generation is being promoted from the viewpoints that, compared to on-shore wind power generation, large wind power can be continuously obtained and human damage risks are low.

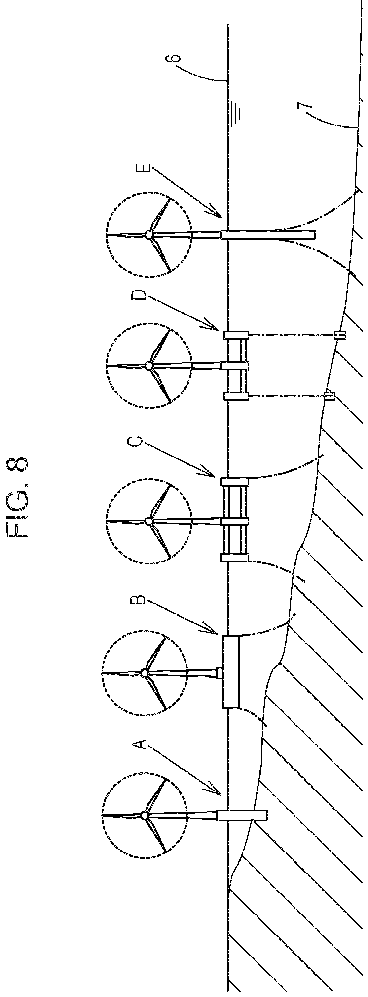

As shown in Fig. 8, existing offshore wind power generation uses structures that are roughly divided into two types, that is, a bottom-fixed type A and floating types B to E. The bottom-fixed type is a type of structure in which a supporting structure is embedded in and fixed to a seabed 7. The bottom-fixed type is suitable for sea areas that are shallow at a considerable distance from shores and where the shape of the seabed 7 slopes gently, and is often used in sea areas near Europe. However, the bottom-fixed type has a disadvantage in that installation locations are limited from the viewpoints that costs are increased as the water depth increases and that, as a result of the bottom-fixed type depending upon ground strength, installation is difficult at the seabed 7 that is a soft ground.

On the other hand, the floating type is a type of structure in which a floating structure and the seabed 7 are secured to each other by a mooring means, such as an anchor. Compared to the bottom-fixed type, since construction is possible even at great water depths, the floating type is a suitable type of structure for offshore wind power generation at deep sea areas, such as sea areas in the vicinity of Japan. However, present floating structures have problems in terms of motion performance in waves and construction costs, and thus there is a demand for further research and development.

Typical existing floating-type offshore wind power generation facilities are divided into four types depending the structure of a floating body, that is, a barge type B, a semi-submersible type C, a tension leg platform (TLP) type D, and a spar type E.

The spar type E is a type of structure that has a columnar shape and that is made to have restorability as a result of having its center of gravity at a location lower than the center of a floating body (see, for example, PTL 1). Series of operation processes are easy to carry out, the number of movable components is small, and construction costs are lower than construction costs of various other structures. However, the spar type has problems in terms of assembly, transportation, and conveyance at the time of installation, and the installation of large windmills is limited to deep sea areas. In addition, since the draft is deep, the spar type cannot be returned to port for large repairs.

The semi-submersible type C is a type of semi-submersible structure that is formed from a plurality of columns and horizontal members connecting the plurality of columns to each other, and whose floating body is submerged up to a predetermined draft (see, for example, PTL 2). Since a floating portion near a sea surface 6 is small, whereas the semi-submersible type tilts relatively easily, it is unlikely to be affected by waves and is applicable to locations where wave conditions are severe. This floating type is suitable for installation at offshore locations. It is possible to perform large-scale repairs near ports. However, structurally, mass is required for providing sufficient buoyancy and restorability, there are many members to be welded together, processing for a sophisticated structure is difficult to perform, and construction costs are increased.

The TLP type D is a type of structure in which a structure submerged to the seabed 7 and a floating structure are moored to each other by using tensile force (see, for example, PTL 3). Since, due to tensile-force mooring, a large load acts upon the mooring/anchoring and large variations occur in the mooring force, installation processes are difficult to carry out and specially ordered ships for use in installation are often required. Since the TLP type is firmly supported by the seabed 7 as a foundation, the TLP type depends upon ground strength.

### Citation List

### Patent Literature

PTL 1: International Publication No. 2020/209728
PTL 2: International Publication No. 2017/220878
PTL 3: International Publication No. 2015/000909

### Summary of Invention

### Technical Problem

As described above, the bottom-fixed-type offshore wind power generation and the floating-type offshore wind power generation have problems in terms of limitations in installation locations, stability in waves, and construction costs.

The present invention is intended to solve the above-described problems, and it is an object of the present invention to provide a floating structure whose installation location is not limited, that provides excellent stability in waves, and that is also suitable for use in extra-large-scale wind power generation of 20 MW or greater.

### Solution to Problem

To this end, the present invention provides, as a floating structure for offshore wind power generation, a floating structure for offshore wind power generation that supports a windmill tower, the floating structure comprising: a floating base where the windmill tower is disposed in a standing manner and that is divided into a plurality of air chambers; and an air amount adjustment unit that adjusts air amounts in the air chambers that oppose each other with a center of the floating base therebetween, wherein each of the air chambers includes an open bottom portion and a soft film body in a slackened state that partitions an inside of the air chamber into an air layer and a water layer.

As an embodiment of an air amount adjustment unit of the floating structure for offshore wind power generation, the air amount adjustment unit includes an air passage that causes the air chambers that oppose each other to communicate with each other, and an on-off valve that opens and closes the air passage; or the air amount adjustment unit further includes a blower that is provided at the air passage; or the on-off valve opens the air passage when a difference between pressures inside the air chambers that oppose each other is detected and the difference between the pressures exceeds the predetermined value.

As an embodiment of a floating base of the floating structure for offshore wind power generation, the floating base includes a flat upper wall, a peripheral wall that extends downward from a peripheral edge of the upper wall, and a partition that extends downward from the upper wall and that divides a space within the peripheral wall into the plurality of air chambers; or the floating base is where the windmill tower is disposed in the standing manner in a vicinity of the center of the floating base; or the floating base has a cavity in the vicinity of the center of the floating base; or the floating base includes a preliminary buoyancy unit around or at an upper surface of the floating base; or the floating base includes a turret-type single-point mooring unit; or each of the air chambers includes a projection prevention member that prevents the film body from projecting from the bottom portion.

### Advantageous Effects of Invention

By using the above-described structures, the floating structure for offshore wind power generation of the present invention can make it possible to reduce motion caused by waves and tilting caused by strong winds, and can be constructed at a low cost as a stable floating structure.

Since the floating structure for offshore wind power generation of the present invention can be installed even in a sea area that is relatively shallow without depending upon the ground strength of a seabed, the floating structure for offshore wind power generation of the present invention can be more widely used than existing floating structures for offshore wind power generation.

### Brief Description of Drawings

[Fig. 1] Fig. 1 is a schematic view showing an embodiment of a floating-type offshore wind power generation facility.
[Fig. 2] Fig. 2 is a schematic view showing an assembly structure of a floating structure of an embodiment.
[Fig. 3] Fig. 3 is an external view of the floating structure of the embodiment, with Fig. 3(a) being a top view and Fig. 3(b) being a bottom view.
[Fig. 4] Fig. 4 is a schematic sectional view along A-A of Figs. 3(a) and 3(b).
[Fig. 5] Fig. 5 is a schematic view showing a motion state of the floating structure of the embodiment, with Fig. 5(a) showing a case in which the wavelength of a wave is less than or equal to the entire length of a floating base and Fig. 5(b) showing a case in which the wavelength of the wave exceeds the entire length of the floating base.
[Fig. 6] Fig. 6 is a schematic view showing an embodiment of single-point mooring, with Fig. 6(a) showing a case when the floating structure is moored and Fig. 6(b) showing a case when the floating structure is moved.
[Fig. 7] Fig. 7 is a schematic view showing a state of use of each offshore wind power generation facility using the floating structure of the present invention.
[Fig. 8] Fig. 8 is a schematic view showing the types of existing offshore wind power generation.

### Description of Embodiments

Next, a specific embodiment of a floating structure for offshore wind power generation of the present invention is described with reference to the drawings.

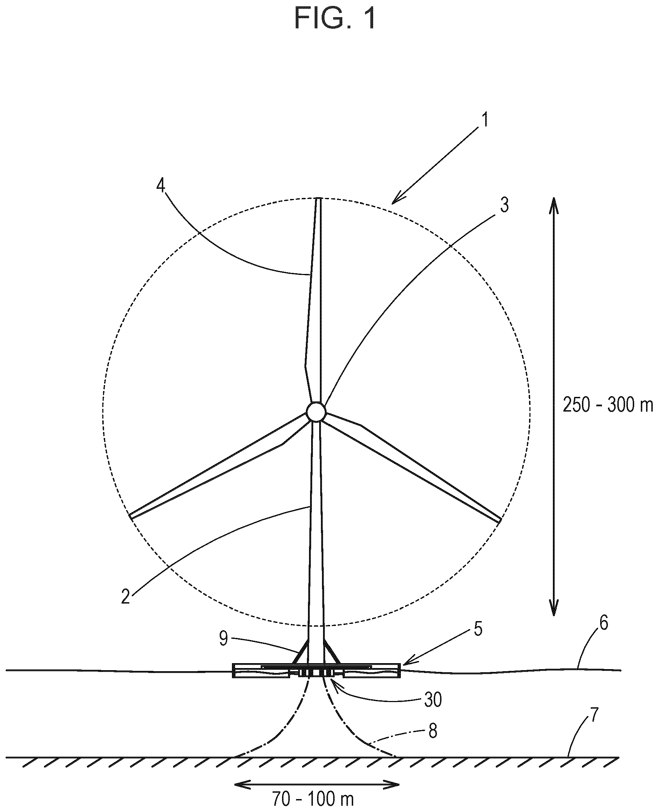

In Fig. 1, reference numeral 1 denotes a windmill tower for wind power generation including a blade 4 that is supported by an upright tower 2 and that rotates around a hub (rotor) 3, reference numeral 5 denotes a floating structure where the windmill tower 1 is disposed in a standing manner from the vicinity of the center thereof by a supporting structural part 9 and that floats on a sea surface 6, and reference numeral 30 denotes a turret-type single-point mooring unit that causes the floating structure 5 to be moored to a seabed 7 by a mooring line 8.

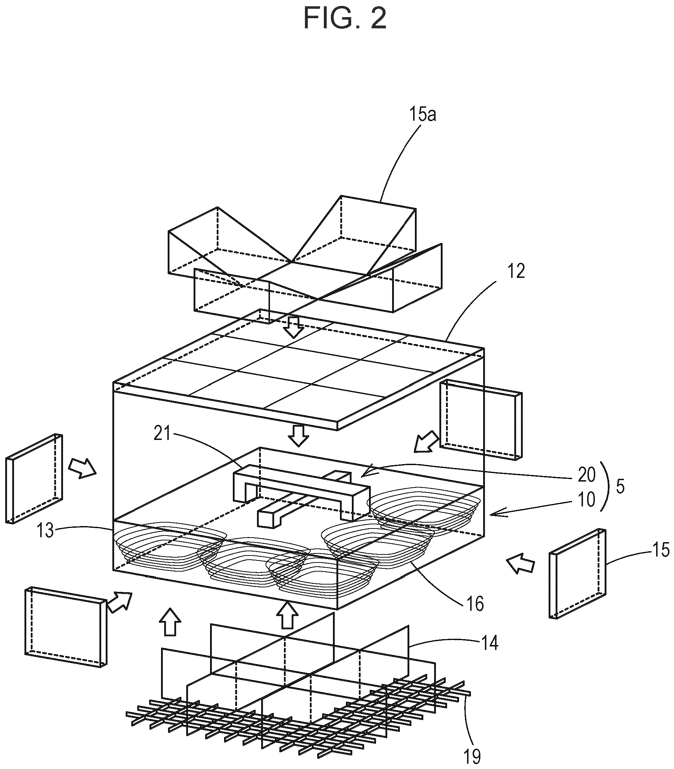

As shown in Figs. 2 to 4, the floating structure 5 includes a floating base 10 on whose upper surface the tower 2 is disposed in the standing manner and that is divided into a plurality of air chambers 11 whose bottom portions are open, and an air amount adjustment unit 20 that adjusts the air amounts in the air chambers 11 that oppose each other with the center of the floating base 10 therebetween. Note that, although in the present embodiment, the windmill tower 1 is disposed in the standing manner in the vicinity of the center of the floating base 10, the windmill tower 1 may be disposed in the standing manner at a displaced location other than the vicinity of the center of the floating base 10, when necessary.

The floating base 10 includes a flat upper wall 12 where the tower 2 is disposed in the standing manner in the vicinity of the center thereof, a peripheral wall 13 that extends downward from a peripheral edge of the upper wall 12 and that surrounds a lower space from the peripheral edge of the upper wall 12, and a partition 14 that extends downward with a length equal to the length from a lower surface of the upper wall 12 to a lower end of the peripheral wall 13 and that divides a space within the peripheral wall 13 into a plurality of air chambers 11a to 11h.

The air chambers 11a to 11h that are separated from each other and whose bottom portions are open are each partitioned into an air layer 17 and a water layer 18 as a result of a film body 16 that is made of a soft material being joined in a slackened state to an inner side of the peripheral wall 13 and an inner side of the partition 14. Here, the soft material is a material, such as polyester or polypropylene, and has the function of following the shape of a wave between the air layer 17 and the water layer 18. Note that each film body 16 need not be joined in an airtight state to the peripheral wall 13 and the partition 14, and may allow air or water to slightly enter as a result of, for example, damage.

Although, in the present embodiment, the floating base 10 is such that the planar shape of the upper wall 12 is a square shape, and a space within the peripheral wall 13 is divided into eight air chambers 11a to 11h by the partition 14, the planar shape of the upper wall 12 may be a circular shape or a regular polygonal shape and the number of air chambers 11 that are separated may be any number of chambers as appropriate in accordance with the planar shape of the upper wall 12. Alternatively, the floating base 10 may be formed by forming a plurality of floating modules having air chambers 11 whose bottom portions are open, and joining and disposing the floating modules around the tower 2.

Further, although, in order to increase a restoring force when the floating base 10 moves by a large amount due to waves or strong winds, preliminary buoyancy units 15 (four in the present embodiment) are provided on an outer peripheral side of the peripheral wall 13, and preliminary watertight compartments (preliminary buoyancy units) 15a (four in the present embodiment) are further provided on an upper surface of the upper wall 12, the preliminary buoyancy units 15 and 15a may be provided when necessary.

Since, in order to follow the shape of a wave, each film body 16 in a slackened state has its peripheral-edge joint portion joined to the peripheral wall 13 and the partition 14 that are the inner walls of the air chambers 11, when the tilt angle of the floating base 10 is large, a part of any of the film bodies 16 may project from the bottom portion of the air chamber 11. Therefore, in order to prevent the projections of the film bodies 16, the bottom portion of each air chamber 11 may be provided with a grid member 19 that is a projection prevention member.

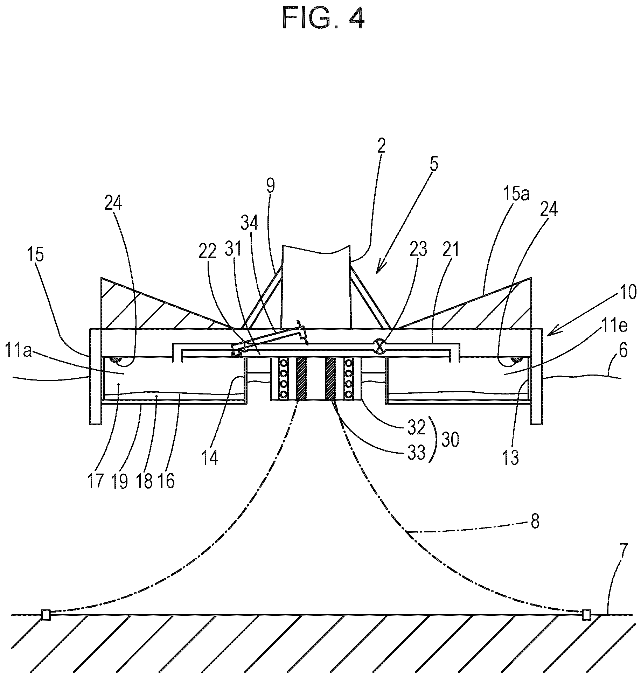

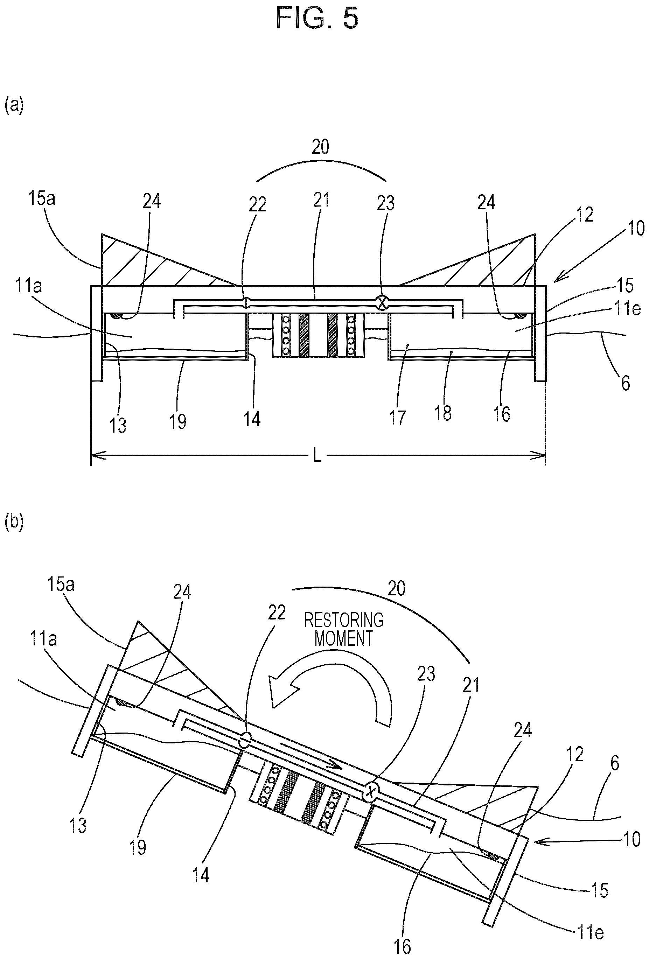

As shown in Figs. 4 and 5, as the air amount adjustment unit 20 that adjusts the air amounts in the air chambers 11 that oppose each other with the center of the floating base 10 therebetween, the floating structure 5 includes an air passage 21 that causes the air chamber 11a and the air chamber 11e that oppose each other to communicate with each other, an on-off valve 22 that opens and closes the air passage 21, a blower 23 that is provided at the air passage 21, and a pressure sensor 24 that detects the pressures inside the respective air chambers 11a and 11e that oppose each other.

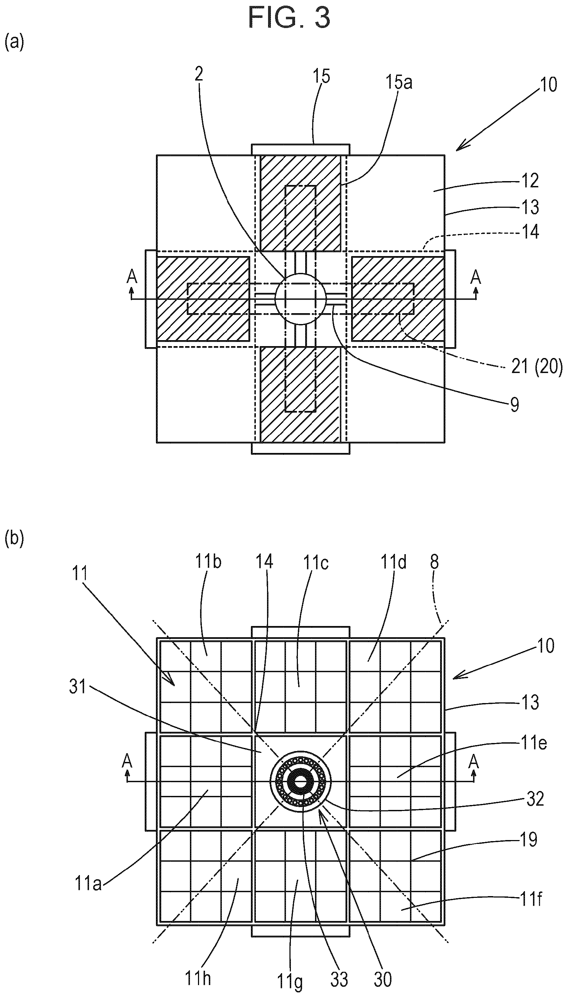

Although, as shown in Figs. 2 and 3(a), in the present embodiment, the air passage 21 that constitutes the air amount adjustment unit 20 is provided to cause the air chambers 11a and 11e that oppose each other to communicate with each other and to cause the air chambers 11c and 11g that oppose each other to communicate with each other, the air passage 21 may instead be provided to cause the air chambers 11b and 11f that oppose each other to communicate with each other and to cause the air chambers 11d and 11h that oppose each other to communicate with each other, or the air passage 21 may instead be provided to cause, among the air chambers 11a to 11h, all of the air chambers 11 that oppose each other to communicate with each other.

The air amount adjustment unit 20 detects the pressures inside the air chambers 11a and 11e by the pressure sensor 24, and is set to close the on-off valve 22 when the difference between the detected pressures inside the air chambers 11a and 11e is less than or equal to a predetermined value, and is set to open the on-off valve 22 when the difference between the detected pressures inside the air chambers 11a and 11e exceeds the predetermined value. When the on-off valve 22 is opened, the blower 23 assists in sending air via the air passage 21 from the air chamber 11 having a higher pressure to the air chamber 11 having a lower pressure. For the air passage 21, a shape and a material having low blowing resistance are used.

As shown in Figs. 3(b) and 4, the single-point mooring unit 30 is disposed at the center of a cavity 31 surrounded by the plurality of air chambers 11a to 11h formed in the floating base 10, and is a turret type that prevents, by single-point mooring, drifting of the floating structure 5. Although, in the present embodiment, the single-point mooring unit 30 is installed in the cavity 31 of the floating base 10, the single-point mooring unit 30 is not limited thereto, and may be disposed in one of the plurality of air chambers 11 of the floating base 10.

The single-point mooring unit 30 includes a ball bearing 32 that is connected to the inner side of the partition wall 14 constituting an inner peripheral surface of the cavity 31 and that rotatably supports the floating base 10, and a circular columnar column 33 that is removably held at an inner periphery of the ball bearing 32 and that is connected to the mooring line 8. An upper portion of the cavity 31 is provided with the supporting structural part 9 where the tower 2 is disposed in the standing manner.

A lock mechanism 34 that prevents rotation of the floating base 10 by engaging with the circular columnar column 33 is installed on the upper surface of the upper wall 12 disposed around the single-point mooring unit 30, and thus the floating base 10 is prevented from rotating around the single-point mooring unit 30 on its own due to a tide or wind force. Note that the single-point mooring unit 30 is rigidly connected to, for example, a beam and the partition 14 disposed around the cavity 31.

Next, uses and operational effects of the present embodiment are described.

The floating structure 5 of the present embodiment can be constructed at, for example, a shipyard, and the upper wall 12, the peripheral wall 13, and the partition 14 of the floating base 10 can be manufactured by using, for example, a steel material, FRP (fiber reinforced plastic), or reinforced concrete.

Thereafter, after installing the single-point mooring unit 30 in the cavity 31 through, for example, a beam (not shown) and disposing in the standing manner the tower 2 on an upper surface of the floating base 10, the blade 4 that rotates around a hub 3 is placed to complete the floating-type offshore wind power generation facility and to tow the facility by a craft to a scheduled-installation sea area where the facility is scheduled to be installed.

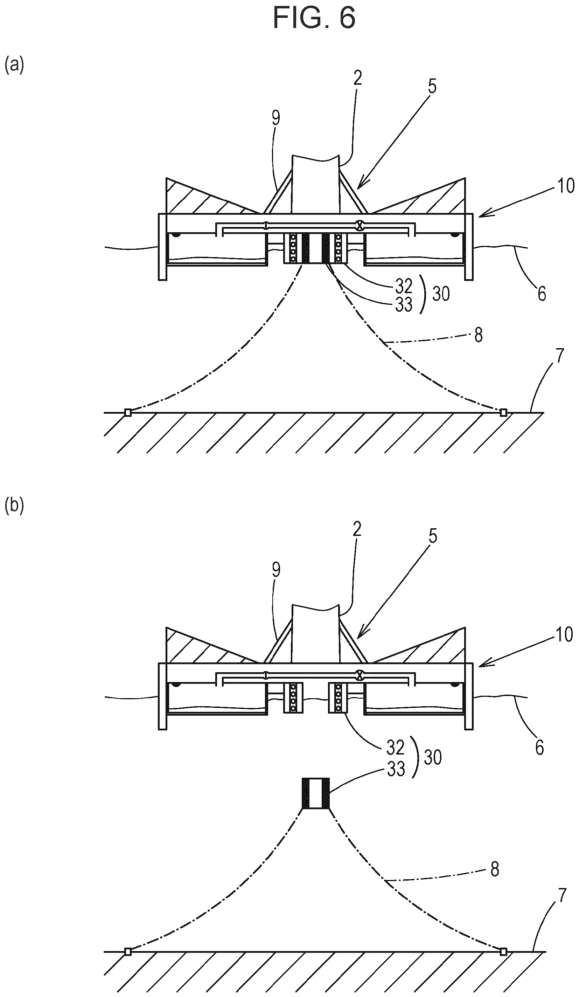

When the floating structure 5 arrives at the scheduled-installation sea area, as shown in Fig. 6(a), the floating structure 5 is moored at a single point by the mooring line 8. At this time, since the floating structure 5 is moored at a single point to the seabed 7 by the single-point mooring unit 30, the mooring line 8 will not become entangled.

Further, in case of emergency, such as a typhoon, as shown in Fig. 6(b), the floating structure 5 is such that, by removing the circular columnar column 33 from the single-point mooring unit 30, the floating structure 5 is towed and thus taken to a safe place.

Next, measures against tilting of the floating structure 5 caused by waves are described below with reference to Fig. 5.

### (1) When wavelength is relatively short (ordinary times)

As shown in Fig. 5(a), in the case where a wavelength is sufficiently shorter than an entire length L of the floating base 10, when the air amount adjustment unit 20 detects the pressures inside the air chambers 11a and 11e that oppose each other by using the pressure sensor 24, the difference between the detected pressures inside the air chambers 11a and 11e is less than or equal to a predetermined value, as a result of which the on-off valve 22 closes to provide a state in which air between the air chambers 11a and 11e that oppose each other cannot pass (move) via the air passage 21. In this case, the effect of increasing the restoring performance with respect to a steady wind force is provided.

### (2) When wavelength becomes two times the entire length L after approaching the entire length L

In the case where a wavelength approaches the entire length L of the floating base 10, when the air amount adjustment unit 20 detects the pressures inside the air chambers 11a and 11e that oppose each other by using the pressure sensor 24, the difference between the detected pressures inside the air chambers 11a and 11e exceeds the predetermined value, as a result of which the on-off valve 22 opens and makes it easy for air between the air chambers 11a and 11e that oppose each other to move via the air passage 21.

As shown in Fig. 5(b), when a wave crest arrives at the left air chamber 11a, air in the air chamber 11a on an upper side of the wave (left side) is compressed by the wave, and the air in the air chamber 11a is pushed up by the wave pressure and easily moves as shown by an arrow to the air chamber 11e on a lower side of the wave (right side) via the air passage 21. At this time, when the speed of movement of the air is not sufficient, the blower 23 that is disposed at the air passage 21 assists in causing the air to flow and can adjust the speed of the flow of the air. In contrast, when a wave trough arrives at the left air chamber 11a, the air flows similarly in the opposite direction.

### (3) When wavelength is considerably long

In the case where a large wave whose wavelength sufficiently exceeds the entire length L of the floating base 10 arrives, the air amount adjustment unit 20 opens the on-off valve 22, further causes the blower 23 to operate, and makes it possible for air between the air chambers 11a and 11e that oppose each other to move rapidly via the air passage 21. At this time, similarly to (2), when a wave crest arrives at the left air chamber 11a, air in the air chamber 11a on the upper side of the wave (left side) is compressed by the wave, and the air in the air chamber 11a moves to the air chamber 11e on the lower side of the wave (right side) via the air passage 21 by operating the blower 23.

By this operation, an overturning moment resulting from the wave force in an upward direction on the upper side of the wave (left side) is offset by a restoring moment resulting from air that has increased in quantity on the lower side of the wave. In contrast, when a wave trough arrives at the left air chamber 11a, similarly, the blower 23 operates reversely and causes the air to flow in an opposite direction, as a result of which, this time, the overturning moment resulting from the wave force in the upward direction on the lower side of the wave suppresses the tilting angle by air that has increased in quantity on the upper side of the wave.

However, in the case where a steady load or force is further applied to a wave whose wavelength is considerably long, when air chambers 11 that oppose each other communicate with each other via the air passage 21, a state similar to that of a single air-type floating body is realized, as a result of which, when a strong wind continues to blow for a long time, from the viewpoint of stability, the tilting angle of the floating base 10 gradually increases and the floating base 10 may be overturned. Therefore, in such a case, the air amount adjustment unit 20 needs to be brought into a state in which the on-off valve 22 is closed, the blower 23 is further stopped, and air between the opposing air chambers 11 cannot pass via the air passage 21.

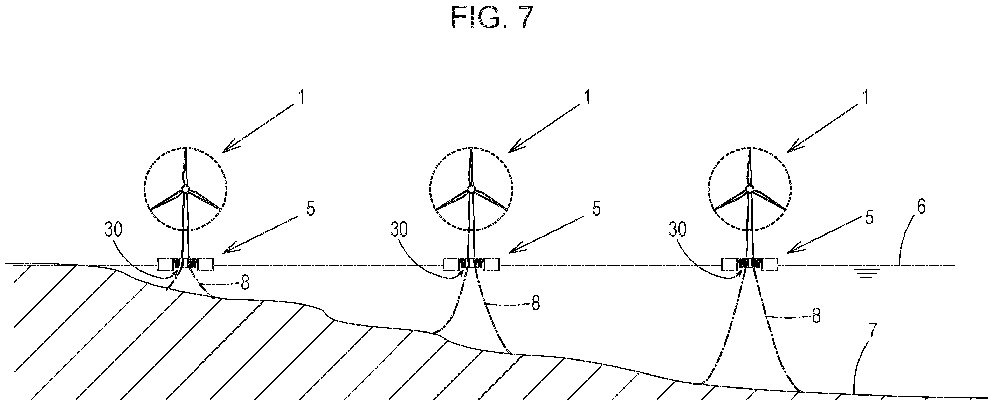

As described above, the floating structure 5 of the present embodiment has high static stability performance, and, as shown in Fig. 1, allows even an extra-large windmill tower of 20 MW or greater in which the diameter of the windmill is 250 m to 300 m to be installed. As shown in Fig. 7, since the floating structure 5 of the present embodiment can be installed even in a sea area that is relatively shallow without depending upon the ground strength of the seabed 7, the floating structure 5 of the present embodiment can be more widely used than existing floating structures for offshore wind power generation. Further, the floating structure 5 of the present embodiment can be used in power generation using ocean energy, such as wave power generation and tidal power generation, or in power generation that is a combination of any one of such power generations and wind power generation, and is thus expected to be used for multiple purposes.

### Industrial Applicability

As measures against global warming, the expansion of use of renewable energies of, for example, wind power generation is one important measure. Among the types of wind power generation, the introduction of offshore wind power generation is being actively promoted from the viewpoints that, compared to on-shore wind power generation, large wind power can be continuously obtained and human damage risks are low.

The present invention experimentally demonstrates that even if an extra-large windmill (height on the order of 250 m to 300 m) of the next generation is installed, high stability performance is provided. In the future, this is expected to be actually proved by experiments on a scale close to full scale, and to be investigated until the floating structure of the present invention is put into practical use. When the floating structure of the present invention is put into practical use, the floating structure can be installed not only in sea areas of Japan, but also in various sea areas of the world.

### Reference Signs List

A bottom-fixed type
B barge type
C semi-submersible type
D tension leg platform (TLP) type
E spar type
L entire length of floating base
1 windmill tower
2 tower
3 hub (rotor)
4 blade
5 floating structure
6 sea surface
7 seabed
8 mooring line
9 supporting structural part
10 floating base
11, 11a to 11h air chamber
12 upper wall
13 peripheral wall
14 partition
15 preliminary buoyancy unit
15a preliminary watertight compartment (preliminary buoyancy unit)
16 film body
17, 34 air layer
18 water layer
19 grid member (projection prevention member)
20 air amount adjustment unit
21 air passage
22 on-off valve
23 blower
24 pressure sensor
30 single-point mooring unit
31 cavity
32 ball bearing
33 circular columnar column
34 lock mechanism

## Claims

1. A floating structure for offshore wind power generation that supports a windmill tower, the floating structure comprising:
a floating base where the windmill tower is disposed in a standing manner and that is divided into a plurality of air chambers; and
an air amount adjustment unit that adjusts air amounts in the air chambers that oppose each other with a center of the floating base therebetween,
wherein each of the air chambers includes an open bottom portion and a soft film body in a slackened state that partitions an inside of the air chamber into an air layer and a water layer.

2. The floating structure for offshore wind power generation according to claim 1,
wherein the air amount adjustment unit includes an air passage that causes the air chambers that oppose each other to communicate with each other, and an on-off valve that opens and closes the air passage.

3. The floating structure for offshore wind power generation according to claim 2,
wherein the air amount adjustment unit further includes a blower that is provided at the air passage.

4. The floating structure for offshore wind power generation according to claim 2 or claim 3,
wherein the on-off valve opens the air passage when a difference between pressures inside the air chambers that oppose each other is detected and the difference between the pressures exceeds the predetermined value.

5. The floating structure for offshore wind power generation according to any one of claims 1 to 4,
wherein the floating base includes a flat upper wall, a peripheral wall that extends downward from a peripheral edge of the upper wall, and a partition that extends downward from the upper wall and that divides a space within the peripheral wall into the plurality of air chambers.

6. The floating structure for offshore wind power generation according to any one of claims 1 to 5,
wherein the floating base is where the windmill tower is disposed in the standing manner in a vicinity of the center of the floating base.

7. The floating structure for offshore wind power generation according to any one of claims 1 to 6,
wherein the floating base has a cavity in the center of the floating base.

8. The floating structure for offshore wind power generation according to any one of claims 1 to 7,
wherein the floating base includes a preliminary buoyancy unit around or at an upper surface of the floating base.

9. The floating structure for offshore wind power generation according to any one of claims 1 to 8,
wherein the floating base includes a turret-type single-point mooring unit.

10. The floating structure for offshore wind power generation according to any one of claims 1 to 9,
wherein each of the air chambers includes a projection prevention member that prevents the film body from projecting from the bottom portion.
